# EUROPEAN PATENT APPLICATION

(11) **EP 4 712 562 A1**
(43) Date of publication of application: **18.03.2026**
(21) Application number: 23936092.8
(22) Date of filing: 10.05.2023
(51) Int. Cl.: H04W 36/08

(54) **PROCESSING METHOD, APPARATUS, DEVICE, AND STORAGE MEDIUM**

(71) Applicant: Beijing Xiaomi Mobile Software Co., Ltd., Beijing 100085 (CN)
(72) Inventor: WU, Yumin, Beijing 100085 (CN)
(74) Representative: Stöckeler, Ferdinand
(86) International application number: PCT/CN2023/093344
(87) International publication number: WO 2024/229771

(57) **Abstract**

The present invention provides a processing method, an apparatus, a device, and a storage medium. The method comprises: when determining that transmission of an uplink signal of a terminal on a candidate cell fails, and/or determining that TA of the candidate cell is changed into an unavailable state, executing first processing, wherein the first processing is used for implementing one of the following: acquiring TA of a candidate cell, and stopping transmitting an uplink signal. Embodiments of the present invention provide a processing method for the situation where "transmission of an uplink signal of a terminal on a candidate cell fails, and/or TA of the candidate cell is changed into an unavailable state", and provide a deterministic reference for further action, so as to avoid the occurrence of the situation of "signal transmission interference and power loss caused by the terminal not knowing what processing needs to be executed when transmission of the uplink signal of the terminal on the candidate cell fails, and/or TA of the candidate cell acquired by the terminal is changed from an available state into an unavailable state", thereby ensuring the communication stability of the terminal.

## Description

### TECHNICAL FIELD

The disclosure relates to a field of communication technology, in particular to a processing method, an apparatus, a device, and a storage medium.

### BACKGROUND

**In** a communication system, a terminal generally occurs a cell handover. A network device generally configures a plurality of candidate cells for the terminal, such that the terminal may perform a handover from a current serving cell to any candidate cell.

Before the terminal perform the handover to the candidate cell, the terminal generally sends an uplink signal to the network device corresponding to the candidate cell, such that the network device may determine a timing advance (TA) of the candidate cell based on the uplink signal and send the TA to the terminal. When the terminal subsequently performs the handover to the candidate cell, the terminal may communicate with the network device corresponding to the candidate cell directly in the candidate cell based on a pre-acquired TA of the candidate cell, without a need to perform a process of "acquiring the TA of the candidate cell", thus improving a handover efficiency and a communication efficiency.

However, there is generally a situation where "the terminal fails to send an uplink signal in the candidate cell, or the TA of the candidate cell acquired by the terminal changes from an available state to an unavailable state" at present. A processing method is urgently needed for this situation.

### SUMMARY

The disclosure provides a processing method, an apparatus, a device, and a storage medium.

In a first aspect, embodiments of the present disclosure provide a processing method. The method includes:
determining that a terminal fails to send an uplink signal in a candidate cell, and/or determining that a TA of a candidate cell changes to be unavailable, and performing a first processing, in which, the first processing is used to implement at least one of: acquiring the TA of the candidate cell, or stopping sending the uplink signal.

**In** a second aspect, embodiments of the present disclosure provide a processing method. The method includes:
receiving failure information sent by a terminal, in which the failure information is sent to a first network device when the terminal performs a handover to a candidate cell, and the failure information is used to indicate that the terminal fails to send an uplink signal in the candidate cell, and/or to indicate that a TA of the candidate cell changes to be unavailable.

**In** a third aspect, embodiments of the present disclosure provide a processing method. The method includes:
receiving failure information sent by a terminal, in which the failure information is used to indicate that the terminal fails to send an uplink signal in a candidate cell, and/or to indicate that a TA of a candidate cell changes to be unavailable.

**In** a fourth aspect, embodiments of the present disclosure provide a communication device. The device includes:
a processing module, configured to determine that a terminal fails to send an uplink signal in a candidate cell, and/or determine that a TA of a candidate cell changes to be unavailable, and perform a first processing, in which the first processing is used to implement at least one of: acquiring the TA of the candidate cell, or stopping sending the uplink signal.

**In** a fifth aspect, embodiments of the present disclosure provide a communication device. The device includes:
a transceiver module, configured to receive failure information sent by a terminal, in which the failure information is sent to a first network device when the terminal performs a handover to a candidate cell, and the failure information is used to indicate that the terminal fails to send an uplink signal in the candidate cell, and/or to indicate that a TA of the candidate cell changes to be unavailable.

**In** a sixth aspect, embodiments of the present disclosure provide a communication device. The device includes:
a transceiver module, configured to receive failure information sent by a terminal, wherein the failure information is used to indicate that the terminal fails to send an uplink signal in a candidate cell, and/or to indicate that a TA of a candidate cell changes to be unavailable.

**In** a seventh aspect, embodiments of the disclosure provide a communication device. The communication device includes: a processor. When the processor calls a computer program stored in a memory, the method described in any one of the first aspect to the third aspect above is implemented.

**In** an eighth aspect, embodiments of the disclosure provide a communication device. The communication device includes: a processor and a memory having a computer program stored thereon. When the processor executes the computer program stored in the memory, the communication device is caused to implement the method described in any one of the first aspect to the third aspect above.

**In** a ninth aspect, embodiments of the disclosure provide a communication device. The communication device includes: a processor and an interface circuit. The interface circuit is configured to receive code instructions and transmit the code instructions to the processor. The processor is configured to run the code instructions to cause the device to perform the method described in any one of the first aspect to the third aspect above.

**In** a tenth aspect, embodiments of the disclosure provide a communication system. The system includes: the communication devices of the fourth aspect to the sixth aspect; or the system includes the communication device of the seventh aspect; or the system includes the communication device of the eighth aspect; or the system includes the communication device of the ninth aspect.

**In** an eleventh aspect, embodiments of the disclosure provide a computer-readable storage medium. The computer-readable storage medium is configured to store instructions used by the above network device. When the instructions are executed, the terminal is caused to implement the method described in any one of the first aspect to the third aspect above.

**In** a twelfth aspect, embodiments of the disclosure provide a computer program product including a computer program. When the computer program is run by a computer, the computer is caused to implement the method described in any one of the first aspect to the third aspect above.

**In** a thirteenth aspect, embodiments of the disclosure provide a chip system. The chip system includes at least one processor and at least one interface for supporting the network device in realizing the functions involved in the method described in any one of the first aspect to the third aspect above, e.g., determining or processing at least one of data or information involved in the method described above. In a possible design, the chip system further includes a memory. The memory is configured to store necessary computer programs and data of the network device. The chip system may consist of chips or may include a chip and other discrete devices.

**In** a fourteenth aspect, embodiments of the disclosure provide a computer program. When the computer program is running on a computer, the computer is caused to implement the method described in any one of the first aspect to the third aspect above.

**In** a fifteenth aspect, embodiments of the disclosure provide a processing method. The method includes:
second network device sending first information to a terminal, in which the first information is used to determine uplink signal configuration information associated with a candidate cell, the uplink signal configuration information is used to configure a transmission resource, the transmission resource is a transmission resource used when the terminal sends an uplink signal to a first network device corresponding to the candidate cell;
the terminal sending the uplink signal to the first network device corresponding to the candidate cell based on the uplink signal configuration information; and
the terminal determining that the terminal fails to send the uplink signal in the candidate cell and/or determining that a timing advance (TA) of a candidate cell changes to be unavailable, and performing a first processing, wherein the first processing is used to implement at least one of: acquiring the TA of the candidate cell, or stopping sending the uplink signal.

### BRIEF DESCRIPTION OF THE DRAWINGS

The above and/or additional aspects and advantages of the disclosure will become apparent and readily understood from the following descriptions of the embodiments in combination with the accompanying drawings, in which:
FIG. 1 is a schematic structural diagram of a communication system provided by an embodiment of the disclosure.
FIG. 2 is a flowchart of a processing method provided by an embodiment of the disclosure.
FIG. 3 is a flowchart of a processing method provided by an embodiment of the disclosure.
FIG. 4 is a flowchart of a processing method provided by an embodiment of the disclosure.
FIG. 5 is a flowchart of a processing method provided by an embodiment of the disclosure.
FIG. 6 is a flowchart of a processing method provided by an embodiment of the disclosure.
FIG. 7 is a flowchart of a processing method provided by an embodiment of the disclosure.
FIGs. 8a-8b are flowcharts of processing methods provided by embodiments of the disclosure.
FIG. 9 is a schematic structural diagram of a communication device provided by an embodiment of the disclosure.
FIG. 10 is a schematic structural diagram of a communication device provided by an embodiment of the disclosure.
FIG. 11 is a schematic structural diagram of a communication device provided by an embodiment of the disclosure.
FIG. 12 is a block diagram of a communication device provided by an embodiment of the disclosure.
FIG. 13 is a schematic structural diagram of a chip provided by an embodiment of the disclosure.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of example embodiments do not represent all implementations consistent with the embodiments of the disclosure. Instead, they are merely examples of apparatuses and methods consistent with aspects related to the embodiments of the disclosure as recited in the attached claims.

The terms used in the embodiments of the disclosure are only for the purpose of describing specific embodiments, and are not intended to limit the embodiments of the disclosure. The singular forms of "a" and "the" used in the embodiments of the disclosure and the attached claims are also intended to include plural forms, unless the context clearly indicates other meanings. It should also be understood that the term "and/or" as used herein refers to and includes any or all possible combinations of one or more associated listed items.

It is understandable that the terms "first", "second" and "third", etc. used in the embodiments of the disclosure are used to describe various information rather than limiting the information. These terms are only used to distinguish the same type of information from each other. For example, without departing from the scope of the embodiments of the disclosure, the first information may be referred to as the second information, and similarly, the second information may be referred to as the first information. Depending on the context, the term "if" or "in a case of" as used herein may be interpreted as "when", "upon" or "in response to determining".

The embodiments of the disclosure are described in detail below, examples of which are illustrated in the accompanying drawings, in which the same or similar reference numerals refer to the same or similar elements throughout. The embodiments described below with reference to the accompanying drawings are exemplary, and they are intended to explain the disclosure and should not be construed as limiting the disclosure.

**In** order to facilitate understanding, the terms involved in the disclosure are introduced first.

**In** order to better understand the processing method provided by an embodiment of the disclosure, a communication system to which the embodiments of the disclosure are applied is described below.

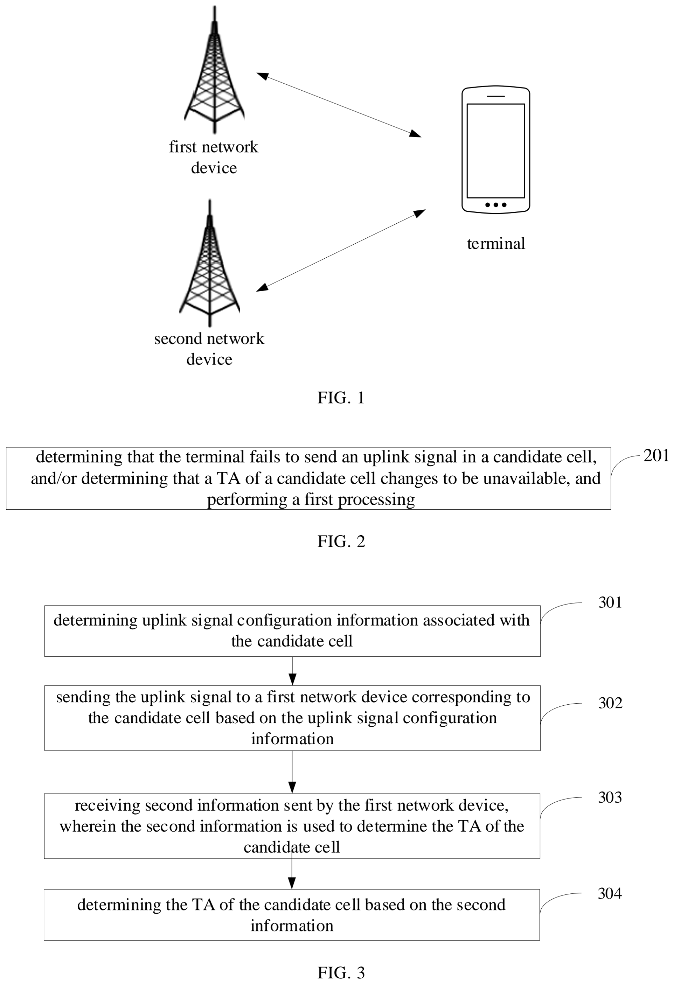

Please refer to FIG. 1, FIG. 1 is a schematic structural diagram of a communication system provided by an embodiment of the disclosure. The communication system may include, but is not limited to, at least one terminal, at least one first network device and at least one second network device. The first network device may be a network device corresponding to a candidate cell of the terminal, and the second network device may be a network device corresponding to a current serving cell of the terminal. The numbers and forms of devices shown in FIG. 1 are provided merely as examples and do not constitute limitations on the embodiments of the disclosure, and one or more terminals, or one or more first network devices, or one or more second network devices may be included in practical applications. By way of example, the communication system shown in FIG. 1 includes a terminal, a first network device, and a second network device.

It is noted that the technical solutions of the embodiments of the disclosure can be applied to various communication systems, such as, a long term evolution (LTE) system, a 5th generation (5G) mobile communication system, a 5G new radio (NR) system, or other future new mobile communication systems.

The terminal in the embodiments of the disclosure may be an entity on a user side for receiving or transmitting signals, such as cellular phone. The terminal may also be referred to as terminal, user equipment (UE), mobile station (MS), mobile terminal (MT), and the like. The terminal may be a car with communication functions, a smart car, a mobile phone, a wearable device, a Pad, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The specific technology and device form adopted by the terminal are not limited in the embodiments of the disclosure.

The network device (such as the first network device or the second network device described above) in the embodiments of the disclosure is an entity on a network side for transmitting or receiving signals. For example, the network device 11 may be an evolved NodeB (eNB), a transmission reception point (TRP), a radio remote head (RRH), a next generation NodeB (gNB) in a NR system, a base station in other future mobile communication systems, or an access node in a wireless fidelity (Wi-Fi) system. The specific technology and specific device form adopted by the base station are not limited in the embodiments of the disclosure. The base station according to the embodiments of the disclosure may be composed of a central unit (CU) and distributed units (DUs). The CU may also be referred to as a control unit. The use of CU-DU structure allows to divide a protocol layer of the network device, such as the base station, such that some of the protocol layer functions are placed in the CU for centralized control, and some or all of the remaining protocol layer functions are distributed in the DUs, and the DUs are centrally controlled by the CU.

It is understandable that the communication system described in the embodiments of the disclosure is intended to clearly illustrate the technical solutions according to the embodiments of the disclosure, and does not constitute a limitation on the technical solutions according to the embodiments of the disclosure. It is understandable by those skilled in the art that as system architectures evolve and new business scenarios emerge, the technical solutions according to the embodiments of the disclosure are also applicable to similar technical problems.

In addition, in order to facilitate understanding of the embodiments of the disclosure, the following points need to be made.

Firstly, in the disclosure, without conflict, each step in any implementation or embodiment can be implemented as an independent embodiment, and steps can be arbitrarily combined. For example, a scheme obtained after removing certain steps from an implementation or embodiment can be implemented as an independent embodiment, steps in the implementation or embodiment are interchangeable, and optional methods or examples in the implementation or embodiment can be combined arbitrarily. Moreover, different implementations or embodiments can also be combined arbitrarily. For example, some or all the steps from different implementations or embodiments can be combined freely, and an implementation or embodiment can be arbitrarily combined with optional methods or examples from other implementations or embodiments.

Secondly, regarding the expressions "A or B", "A and/or B", "at least one of A or B", "A in one case and B in another case", and "in response to one case A and in response to another case B" in the disclosure, depending on the circumstances, they may describe at least one of the following scenarios: executing A independently of B, i.e., A in some embodiments; executing B independently of A, i.e., B in some embodiments; selectively executing A or B, i.e., executing either A or B in some embodiments; and executing A and B, i.e., executing both A and B in some embodiments.

Thirdly, each element, row, or column in the tables described herein can be implemented as an independent embodiment. Any combination of the element, the row and/or the column can also be implemented as an independent embodiment.

Fourthly, in some implementations or embodiments, the terms "including A", "comprising A", "for indicating A" and "carrying A" can be interpreted as either directly carrying A or indirectly indicating A.

Fifthly, in some implementations or embodiments, the terms "in response to...", "in a case of...", "when...", "while", "upon..." and "if..." can be used interchangeably.

In an embodiment, the method of the embodiments of the present disclosure may be applicable to a dual connectivity (DC) system. For example, in the DC system, a terminal may be connected to two nodes through two cell groups simultaneously, such as the terminal may be connected to a master node (MN) (or referred to as a master network device) through a master cell group (MCG), and connected to a secondary node (SN) (or referred to as a secondary network device) through a secondary cell group (SCG). For example, the MCG may include one primary cell (PCell) and one or more secondary cells (SCell). The SCG may include one secondary cell (SCell) and one or more SCells. The PCell and the PSCell may be collectively referred to as special cells (SpCell).

It should be noted that the above DC system is only an optional applicable scenario of the present disclosure, and the method of the present disclosure may also be used in other communication scenarios, which is not limited by the present disclosure.

FIG. 2 is a flowchart of a processing method provided by an embodiment of the disclosure. The method is performed by a terminal. As illustrated in FIG. 2, the method may include the following step.

At step 201, it is determined that the terminal fails to send an uplink signal in a candidate cell, and/or determined that a TA of a candidate cell changes to be unavailable, and a first processing is performed.

In an example, in some embodiments, the candidate cell may be a cell to which the terminal is possible to perform a handover in the future. In other words, the candidate cell is a cell that a UE is possible to access in the future, instead of a current serving cell of the UE.

In an example, the candidate cell may be configured by a second network device corresponding to the current serving cell of the terminal, and the second network device may be understood as: a network device that manages the current serving cell of the terminal. The second network device may configure one or more candidate cells to the terminal. In an example, the second network device may configure the one or more candidate cells to the terminal by sending configuration information of the one or more candidate cells to the terminal. In an example, the configuration information of the candidate cell may include at least one of a time-frequency resource of the candidate cell, a cell configuration identifier of the candidate cell, a cell type of the candidate cell, or a triggering condition of the candidate cell.

In an example, the cell configuration identifier of the candidate cell may be used to identify the candidate cell.

In an example, the cell type of the candidate cell may include at least one of: a primary cell (PCell); a primary secondary cell (PSCell); a secondary cell (SCell); a special cell (SpCell); a master cell group (MCG); or a secondary cell group (SCG).

**In** an example, the triggering condition of the candidate cell may be understood as that: when the terminal meets the triggering condition of a certain candidate cell, the terminal performs the handover to the candidate cell. In an example, the triggering condition of the candidate cell may be predefined by a protocol, instead of being included in the configuration information of the candidate cell.

**In** an example, in some embodiments, the above description "the candidate cell is a cell to which the terminal is possible to perform a handover in the future" may be understood as that: the second network device may subsequently control the terminal to perform the handover from the current serving cell to a certain candidate cell through signaling, for example, the network device controls the terminal to perform the handover from a current serving cell #1 to a candidate cell #2 through the signaling. In an example, the signaling may, for example, include at least one of:
Layer 1 (L1) signaling (such as downlink control information (DCI) signaling); or
Layer 2 (L2) signaling (such as media-access-control control element (MAC CE) signaling).

**In** an example, in some other embodiments, the above description "the candidate cell is the cell to which the terminal is possible to perform the handover in the future" may be understood as that: when a trigger condition of a candidate cell is met, the terminal performs the handover to the candidate cell.

It can be seen that in some embodiments, the candidate cell is mainly used for the terminal to perform a cell handover and change. In an example, in some embodiments, when the cell type of the candidate cell is PCell, the candidate cell may be used for the terminal to perform a PCell change. When the cell type of the candidate cell is PSCell, the candidate cell may be used for the terminal to perform a PSCell change. When the cell type of the candidate cell is SCell, the candidate cell may be used for the terminal to perform a SCell change. When the cell type of the candidate cell is SpCell, the candidate cell may be used for the terminal to perform a SpCell change. When the cell type of the candidate cell is MCG, the candidate cell may be used for the terminal to perform an MCG change. When the cell type of the candidate cell is SCG, the candidate cell may be used for the terminal to perform an SCG change.

**In** an example, in some embodiments, the uplink signal may be used by the first network device of the candidate cell to determine the TA of the candidate cell, and the terminal sends the uplink signal to the first network device corresponding to the candidate cell, such that the first network device may determine the TA of the candidate cell and send the TA to the terminal, such that the terminal may communicate with the first network device directly in the candidate cell based on a pre-acquired TA of the candidate cell when the terminal subsequently performs the handover to the candidate cell, without a need to perform a process of "acquiring the TA of the candidate cell", thus improving a handover efficiency and a communication efficiency. In an example, the aforementioned first network device corresponding to the candidate cell may be understood as: a network device that manages the candidate cell. In an example, the first network device may be the same as or different from the second network device.

In an example, in some embodiments, the above description "the terminal failing to send the uplink signal in the candidate cell" may include at least one of:
receiving no acknowledgement information from a first network device after the terminal sends the uplink signal to the first network device corresponding to the candidate cell; or
a number of times that the terminal sends the uplink signal to a first network device corresponding to the candidate cell being greater than or equal to a first threshold.

In an example, the uplink signal may include at least one of: a random access signal (e.g., a physical random access channel (PRACH) signal or a preamble), an uplink sounding signal (e.g., a sounding reference signal (SRS)). In an example, when the uplink signal is the random access signal, the uplink signal may also be used to initiate a random access procedure in the candidate cell.

In an example, in some embodiments, when the terminal sends the uplink signal to the first network device, if the first network device successfully receives the uplink signal, the first network device may send acknowledgement information to the terminal, for example, after the terminal sends the uplink signal (such as Preamble) to the first network device, if the first network device receives the Preamble, the first network device may send the acknowledgement information (such as, random access response (RAR)) to the termina. If the terminal receives no acknowledgement information after sending the uplink signal to the first network device, the terminal may send the uplink signal to the first network device again. Based on this, when the above-mentioned "receiving no acknowledgement information from the first network device after the terminal sends the uplink signal to the first network device corresponding to the candidate cell" is present, or when the above-mentioned "the number of times that the terminal sends the uplink signal to the first network device corresponding to the candidate cell being greater than or equal to the first threshold" is present, it means that the first network device has not successfully received the uplink signal, that is, the first network device cannot determine the TA of the candidate cell, and the terminal cannot successfully acquire the TA of the candidate cell. In this case, the terminal may perform the first processing. In an example, the first processing is used to implement at least one of: acquiring the TA of the candidate cell, or stopping sending the uplink signal. When the first processing is used for the TA of the subsequent candidate cell, the terminal may subsequently successfully acquire the TA of the candidate cell, ensuring that when the terminal subsequently performs the handover to the candidate cell, the terminal may communicate with the first network device directly in the candidate cell based on the TA of the candidate cell which has been acquired, thus improving the handover efficiency and the communication efficiency. For a detailed introduction to the first processing, reference may be made to the description of the subsequent embodiments.

**In** an example, in some embodiments, the above description "the TA of the candidate cell acquired by the terminal changes from an available state to an unavailable state" may include at least one of:
a change of configuration information of the candidate cell;
a change of uplink signal configuration information associated with the candidate cell;
a change of a serving cell of the terminal; or
an expiration of a timer (e.g., a time alignment timer (TAT)) corresponding to the TA of the candidate cell.

**In** an example, in some embodiments, the above description "the change of configuration information of the candidate cell" may be understood as that: the second network device reconfigures for the terminal the configuration information of the candidate cell. For example, assumed that for candidate cell #1, the configuration information of the candidate cell previously configured by the second network device is configuration information #1 of the candidate cell, but at a current time point, the second network device reconfigures the configuration information of the candidate cell for the candidate cell #1 to be as configuration information #2 of the candidate cell, in this case, it is considered that the configuration information of the candidate cell #1 has changed. In an example, the change of the configuration information of the candidate cell may include, for example, a change of the cell type of the candidate cell in the configuration information of the candidate cell, a change of the time-frequency resource of the candidate cell, etc.

In an example, in some embodiments, the uplink signal configuration information is used to configure a transmission resource, and the transmission resource is a transmission resource used when the terminal sends the uplink signal to a first network device corresponding to the candidate cell. For example, if candidate cell #1 is associated with uplink signal configuration information #1 and candidate cell #2 is associated with uplink signal configuration information #2, then the uplink signal configuration information #1 is used to configure a transmission resource used when the terminal sends the uplink signal to the first network device corresponding to the candidate cell #1. The uplink signal configuration information #2 is used to configure a transmission resource used when the terminal sends the uplink signal to the first network device corresponding to the candidate cell #2.

In an example, in some embodiments, the above transmission resource may include at least one of: a time domain resource (such as a slot); a frequency domain resource (such as a cell configuration identifier of the candidate cell); a spatial domain resource (such as synchronous signal block index, (SSB index)); a code domain resource (such as preamble index); or a time and frequency code (such as PRACH occasion).

In an example, the uplink signal configuration information may be configured by the second network device to the terminal. In an example, the second network device may send the uplink signal configuration information associated with the candidate cell to the terminal through first information. The first information may include at least one of: radio resource control (RRC) message, physical control information, or media access control (MAC) control information. The physical control information may be, for example, PDCCH order DCI (Physical Downlink Control Channel order Downlink Control Information). The MAC control information may be, for example, MAC CE information.

In an example, the change of the uplink signal configuration information associated with the candidate cell may be understood as that: the second network device reconfigures for the terminal the uplink signal configuration information associated with the candidate cell. For example, assumed that for candidate cell #1, the associated uplink signal configuration information previously configured by the second network device is uplink signal configuration information #1, but at the current time point, the second network device reconfigures the uplink signal configuration information associated with the candidate cell #1 to be as uplink signal configuration information #2. In this case, it is considered that the uplink signal configuration information associated with the candidate cell #1 changes.

In an example, in some embodiments, the change of the service cell of the terminal may be understood as that: the network device controls the change of the service cell of the terminal through signaling, or the change of the service cell of the terminal is triggered due to satisfying the triggering condition of the cell. For the detailed description of this part, reference may be made to the description of the aforementioned embodiments. In an example, the change of the service cell of the terminal may be, for example, the change of the PCell of the terminal, or the change of the SCG of the terminal, etc.

In an example, in some embodiments, the above timer may be started when the terminal obtains the TA of the candidate cell. When the timer expires, it indicates that the TA of the candidate cell is changed to be unavailable.

It can be seen that after the terminal acquires the TA of the candidate cell, if the terminal determines the change of the configuration information of the candidate cell, or the change of the uplink signal configuration information associated with the candidate cell, or the change of the serving cell of the terminal, or the expiration of the timer corresponding to the TA of the candidate cell, it is considered that the TA of the candidate cell changes from the available state to the unavailable state.

In an example, in some embodiments, when the TA of the candidate cell acquired by the terminal changes from the available state to the unavailable state, it means that the TA of the candidate cell currently acquired by the terminal cannot be used for the terminal to communicate with the first network device of the candidate cell when the terminal performs the handover to the candidate cell. In this case, the terminal may perform the first processing. In an example, the first processing is used to implement at least one of: acquiring the TA of the candidate cell, or stopping sending the uplink signal. When the first processing is used for the TA of the subsequent candidate cell, the terminal may subsequently successfully acquire the available TA of the candidate cell, which may ensure that when the terminal subsequently performs the handover to the candidate cell, the terminal may communicate directly with the first network device in the candidate cell based on the available TA of the candidate cell that has been acquired, thus improving the handover efficiency and the communication efficiency. For a detailed introduction to the first processing, reference may be made to the description of subsequent embodiments.

In an example, in some embodiments, the above description "performing the first processing" may include at least one of:
performing the first processing based on an indication of a second network device; or
performing the first processing based on a protocol agreement.

In an example, in some embodiments, the first process may include at least one of:
sending failure information, in which the failure information may be used to indicate that: the terminal fails to send the uplink signal in the candidate cell, and/or the TA of the candidate cell acquired by the terminal changes to be unavailable; or
stopping sending the uplink signal to a first network device corresponding to the candidate cell;
continuing sending the uplink signal to a first network device corresponding to the candidate cell;
reserving a transmission resource for the uplink signal;
discarding a transmission resource for the uplink signal; or
triggering a random access procedure.

In an example, in some embodiments, the "sending the failure information" in the first processing may include at least one of:
sending the failure information to the first network device corresponding to the candidate cell; or
sending the failure information to a second network device corresponding to the current serving cell.

In an example, in some embodiments, the above "sending the failure information to the first network device corresponding to the candidate cell" may include: when the terminal performs a handover to the candidate cell, sending the failure information to the first network device corresponding to the candidate cell.

For example, in some embodiments, assumed that the current serving cell of the terminal is a cell #3, and the terminal determines failing to send the uplink signal in a candidate cell #4 fails (such as the terminal receives no acknowledgement information after sending the uplink signal to the first network device corresponding to the candidate cell #4), and/or determines that the TA of the candidate cell #4 acquired by the terminal changes to be unavailable (such as the configuration information of the candidate cell #4 changes). In this case, the terminal does not send the failure message. The terminal sends the failure message to the first network device corresponding to the candidate cell #4 when the terminal performs the handover to the candidate cell #4, and the failure message indicates that the terminal failed to successfully acquire the TA of the candidate cell #4, and/or the TA of the candidate cell #4 acquired by the terminal changes to be unavailable.

In an example, in some embodiments, the above "sending the failure information to the second network device corresponding to the current serving cell" may include, for example, sending the failure information to the second network device (i.e., a master node to which the terminal is connected) corresponding to the MCG in the current serving cell.

In an example, in some embodiments, the above "failure information" may include at least one of a triggering cause, a purpose of the candidate cell, a purpose of the uplink signal, a first cell indication, or a second cell indication.

In an example, the triggering cause may be: a cause for triggering sending of the failure information. The triggering cause may include that: the terminal fails to send the uplink signal in the candidate cell, and/or the TA of the candidate cell acquired by the terminal changes to be unavailable

In an example, the purpose of the candidate cell may be used, for example, to perform the PCell change or the PSCell change, etc.

In an example, the purpose of the uplink signal may be, for example, acquiring the TA of the candidate cell, and/or triggering the random access procedure.

In an example, the first cell indication is used to indicate: a candidate cell for which the TA is not acquired, and/or a candidate cell for which the TA changes to be unavailable. Illustratively, the first cell indication may be used to indicate the above "candidate cell #4" for example.

In an example, the second cell indication may be used to indicate: a serving cell of the terminal when the terminal fails to send the uplink signal in the candidate cell, and/or when the TA of the candidate cell acquired by the terminal changes from the available state to the unavailable state. Illustratively, the second cell indication may be used to indicate the above "cell #3" for example.

In an example, in some embodiments, the first cell indication may include at least one of:
a cell configuration identifier of a cell indicated by the first cell indication;
a cell group configuration identifier of a cell indicated by the first cell indication;
a cell identifier of a cell indicated by the first cell indication; or
a cell group identifier of a cell indicated by the first cell indication.

In an example, in some embodiments, the second cell indication may include at least one of:
a cell configuration identifier of a cell indicated by the second cell indication;
a cell group configuration identifier of a cell indicated by the second cell indication;
a cell identifier of a cell indicated by the second cell indication; or
a cell group identifier of a cell indicated by the second cell indication.

In an example, in some embodiments, the above "continuing sending the uplink signal to the first network device corresponding to the candidate cell" in the above first processing may include: continuing sending the uplink signal to the first network device based on the uplink signal configuration information associated with the candidate cell. In an example, in some embodiments, when the first processing is triggered to be performed due to "the change of the uplink signal configuration information associated with the candidate cell", the terminal may continue sending the uplink signal to the first network device based on the latest uplink signal configuration information associated with the candidate cell configured by the second network device. In an example, the method for the terminal to send the uplink signal to the first network device based on the uplink signal configuration information may include that: the terminal sends the uplink signal to the first network device on the transmission resource configured based on the uplink signal configuration information.

In an example, in some embodiments, the above "triggering the random access procedure" in the first processing may include at least one of:
triggering the random access procedure in the candidate cell; or
triggering the random access procedure in the current serving cell of the terminal.

In an example, in some embodiments, the above "triggering the random access procedure in the candidate cell" may include: sending a random access signal to the first network device corresponding to the candidate cell.

In an example, in some embodiments, the above "triggering the random access procedure in the current serving cell of the terminal may include: sending a random access signal to the second network device corresponding to the current serving cell of the terminal. In an example, in some embodiments, the terminal may trigger the random access procedure in the current serving cell when the current serving cell of the terminal shares a TA with the candidate cell.

It can be known from the above content that the random access signal may be the uplink signal, therefore, "triggering the random access procedure" herein may be understood as: continuing to send the uplink signal.

In addition, in some embodiments, the above "triggering the random access procedure in the current serving cell of the terminal" may include at least one of:
triggering the random access procedure in a primary cell of the current serving cell;
triggering the random access procedure in a cell with a cell type being the same as a cell type of the candidate cell in the current serving cell; or
triggering the random access procedure in a cell with a cell group type being the same as a cell group type of the candidate cell in the current serving cell.

For example, assumed that the cell type of the candidate cell without acquiring the TA, and/or the candidate cell in which the TA changes to be unavailable is PCell, or the cell group type of the candidate cell without acquiring the TA, and/or the candidate cell in which the TA changes to be unavailable is MCG, the terminal may trigger the random access procedure in the PCell of a current serving MCG. Or, assumed that the cell type of the candidate cell without acquiring the TA, and/or the candidate cell in which the TA changes to be unavailable is PSCell, or the cell group type of the candidate cell without acquiring the TA, and/or the candidate cell in which the TA changes to be unavailable is SCG, the terminal may trigger the random access procedure in the PSCell of the SCG in the current serving cell.

In summary, in an embodiment of the present disclosure, in response to the terminal failing to send the uplink signal in the candidate cell, and/or in response to the TA of the candidate cell acquired by the terminal changing from the available state to the unavailable state, the terminal may perform the first processing. It can be seen that the present disclosure provides a processing method for these situations of "the terminal failing to send the uplink signal in the candidate cell, and/or the TA of the candidate cell acquired by the terminal changing from the available state to the unavailable state", and provides a deterministic reference for further actions, which may avoid a situation of "when the terminal fails to send the uplink signal in the candidate cell, and/or, when the TA of the candidate cell acquired by the terminal changes from the available state to the unavailable state, the terminal does not know what to do, resulting in a signal transmitting interference and a power loss", thus ensuring stability of terminal communication.

FIG. 3 is a flowchart of a processing method provided by an embodiment of the disclosure. The method is performed by a terminal. As illustrated in FIG. 3, the method may include the following steps.

At step 301, uplink signal configuration information associated with a candidate cell is determined.

In an example, determining the uplink signal configuration information associated with the candidate cell may include:

receiving first information sent by a second network device, in which the first information is used to determine the uplink signal configuration information associated with the candidate cell, such that the terminal may determine the uplink signal configuration information associated with the candidate cell based on the first information.

In an example, in some embodiments, the first information may carry the uplink signal configuration information associated with the candidate cell. In an example, the first information includes at least one of:
an RRC message;
physical control information; or
MAC control information.

At step 302, an uplink signal is sent to a first network device corresponding to the candidate cell based on the uplink signal configuration information.

In an example, the uplink signal configuration information may be: uplink signal configuration information associated with the candidate cell corresponding to the first network device.

At step 303, second information sent by the first network device is received, in which the second information is used to determine a TA of the candidate cell.

In an example, the second information may be determined by the first network device based on the uplink signal sent by the terminal.

At step 304, the TA of the candidate cell is determined based on the second information.

In an example, in some embodiments, the terminal may send the uplink signal to the candidate cell prior to a handover to the candidate cell, such that the TA of the candidate cell may be pre-acquired prior to the handover to the candidate cell. When the terminal subsequently performs the handover to the candidate cell, the terminal may directly communicate with the first network device in the candidate cell based on the pre-acquired TA of the candidate cell, without a need to perform a process of "acquiring the TA of the candidate cell", thus improving a handover efficiency and a communication efficiency.

For example, in some embodiments, the terminal may send the uplink signal to the candidate cell before acquiring L1 signaling or L2 signaling. For the relevant introduction of the L1 signaling and the L2 signaling, reference may be made to the description of the above embodiments.

For a detailed introduction of steps 301-304, reference may be made to the description of the above embodiments.

In an example, the above steps 303 and 304 are optional steps. In an example, in some embodiments, when the terminal fails to send the uplink signal in the candidate cell in step 302, the method in the embodiment of FIG. 3 may include steps 301-302, but not steps 303 and 304. In an example, in another embodiment, when the terminal successfully sends the uplink signal in the candidate cell in step 302, the method in the embodiment of FIG. 3 may include steps 301-304.

In summary, in an embodiment of the present disclosure, the terminal may send the uplink signal to the first network device corresponding to the candidate cell based on the uplink signal configuration information associated with the candidate cell, and may receive the TA of the candidate cell sent by the first network device. Therefore, when the terminal subsequently performs the handover to the candidate cell, the terminal may directly communicate with the first network device in the candidate cell based on the pre-acquired TA of the candidate cell, without a need to perform the process of "acquiring the TA of the candidate cell", thus improving the handover efficiency and the communication efficiency.

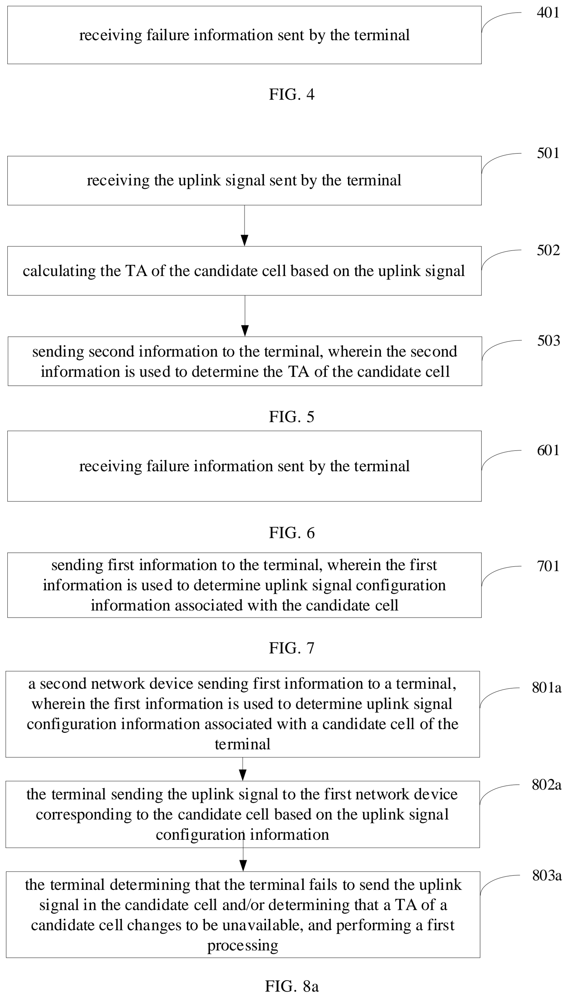

FIG. 4 is a flowchart of a processing method provided by an embodiment of the disclosure. The method is performed by a first network device. As illustrated in FIG. 4, the method may include the following step.

At step 401, failure information sent by a terminal is received.

In an example, the failure information is sent to the first network device when the terminal performs a handover to the candidate cell, and the failure information is used to indicate that the terminal fails to send an uplink signal in the candidate cell, and/or to indicate that a TA of the candidate cell changes to be unavailable.

In an example, the failure information may include at least one of:
a triggering cause, in which the triggering cause includes the terminal failing to send the uplink signal in the candidate cell, and/or the TA of the candidate cell changing to be unavailable;
a purpose of the candidate cell;
a purpose of the uplink signal;
a first cell indication, wherein the first cell indication is used to indicate: a candidate cell for which the TA is not acquired, and/or a candidate cell for which the TA changes to be unavailable; or
a second cell indication, wherein the second cell indication is used to indicate: a serving cell of the terminal when the terminal fails to send the uplink signal in the candidate cell, and/or when the TA of the candidate cell changes to be unavailable.

In an example, the first cell indication includes at least one of:
a cell configuration identifier of a cell indicated by the first cell indication;
a cell group configuration identifier of a cell indicated by the first cell indication;
a cell identifier of a cell indicated by the first cell indication; or
a cell group identifier of a cell indicated by the first cell indication;
the second cell indication includes at least one of:
a cell configuration identifier of a cell indicated by the second cell indication;
a cell group configuration identifier of a cell indicated by the second cell indication;
a cell identifier of a cell indicated by the second cell indication; or
a cell group identifier of a cell indicated by the second cell indication.

For a detailed introduction of step 401, reference may be made to the description of the above embodiments.

In summary, in an embodiment of the present disclosure, in response to the terminal failing to send the uplink signal in the candidate cell, and/or in response to the TA of the candidate cell acquired by the terminal changing from the available state to the unavailable state, the terminal may send the failure information to the first network device. It can be seen that the present disclosure provides a processing method for these situations of "the terminal failing to send the uplink signal in the candidate cell, and/or the TA of the candidate cell acquired by the terminal changing from the available state to the unavailable state", and provides a deterministic reference for further actions, which may avoid a situation of "when the terminal fails to send the uplink signal in the candidate cell, and/or, when the TA of the candidate cell acquired by the terminal changes from the available state to the unavailable state, the terminal does not know what to do, resulting in a signal transmitting interference and a power loss", thus ensuring stability of terminal communication.

FIG. 5 is a flowchart of a processing method provided by an embodiment of the disclosure. The method is performed by a first network device. As illustrated in FIG. 5, the method may include the following steps.

At step 501, an uplink signal sent by a terminal is received.

At step 502, a TA of a candidate cell is calculated based on the uplink signal.

At step 503, second information is sent to the terminal, in which the second information is used to determine the TA of the candidate cell.

For a detailed introduction of steps 501-503, reference may be made to the description of the above embodiments.

In summary, in an embodiment of the present disclosure, the first network device may receive the uplink signal sent by the terminal, calculate the TA of the candidate cell based on the uplink signal, and send the TA of the candidate cell to the terminal. Therefore, when the terminal subsequently performs a handover to the candidate cell, the terminal may directly communicate with the first network device in the candidate cell based on the pre-acquired TA of the candidate cell, without a need to perform a process of "acquiring the TA of the candidate cell", thus improving a handover efficiency and a communication efficiency.

FIG. 6 is a flowchart of a processing method provided by an embodiment of the disclosure. The method is performed by a second network device. As illustrated in FIG. 6, the method may include the following step.

At step 601, failure information sent by a terminal is received.

In an example, the failure information is used to indicate that the terminal fails to send an uplink signal in a candidate cell, and/or to indicate that a TA of a candidate cell changes to be unavailable.

For a detailed introduction of step 601, reference may be made to the description of the above embodiments.

In summary, in an embodiment of the present disclosure, in response to the terminal failing to send the uplink signal in the candidate cell, and/or in response to the TA of the candidate cell acquired by the terminal changing from the available state to the unavailable state, the terminal may send the failure information to the second network device. It can be seen that the present disclosure provides a processing method for these situations of "the terminal failing to send the uplink signal in the candidate cell, and/or the TA of the candidate cell acquired by the terminal changing from the available state to the unavailable state", and provides a deterministic reference for further actions, which may avoid a situation of "when the terminal fails to send the uplink signal in the candidate cell, and/or, when the TA of the candidate cell acquired by the terminal changes from the available state to the unavailable state, the terminal does not know what to do, resulting in a signal transmitting interference and a power loss", thus ensuring stability of terminal communication.

FIG. 7 is a flowchart of a processing method provided by an embodiment of the disclosure. The method is performed by a second network device. As illustrated in FIG. 7, the method may include the following step.

At step 701, first information is sent to a terminal. The first information is used to determine uplink signal configuration information associated with a candidate cell.

In an example, the uplink signal configuration information is used to configure a transmission resource, and the transmission resource is a transmission resource used when the terminal sends an uplink signal to a first network device corresponding to the candidate cell.

For a detailed introduction of step 701, reference may be made to the description of the above embodiments.

In summary, in an embodiment of the present disclosure, the second network device may send the uplink signal configuration information associated with the candidate cell to the terminal, the uplink signal configuration information is used to configure the transmission resource used when the terminal sends the uplink signal to the first network device corresponding to the candidate cell. Then, the terminal may send the uplink signal to the first network device corresponding to the candidate cell based on the uplink signal configuration information associated with the candidate cell, such that the first network device may determine the TA of the candidate cell based on the uplink signal and send the TA of the candidate cell to the terminal. Therefore, when the terminal subsequently performs a handover to the candidate cell, the terminal may directly communicate with the first network device in the candidate cell based on the pre-acquired TA of the candidate cell, without a need to perform a process of "acquiring the TA of the candidate cell", thus improving a handover efficiency and a communication efficiency.

FIG. 8a is a flowchart of a processing method provided by an embodiment of the disclosure. As illustrated in FIG. 8a, the processing method may include the following steps.

At step 801a, a second network device sends first information to a terminal, in which the first information is used to determine uplink signal configuration information associated with a candidate cell of the terminal.

In an example, the uplink signal configuration information is used to configure a transmission resource, the transmission resource is a transmission resource used when the terminal sends an uplink signal to a first network device corresponding to the candidate cell.

At step 802a, the terminal sends the uplink signal to the first network device corresponding to the candidate cell based on the uplink signal configuration information.

At step 803a, the terminal determines that the terminal fails to send the uplink signal in the candidate cell and/or determines that a TA of a candidate cell changes to be unavailable, and perform a first processing.

In an example, the first processing may be used to implement at least one of: acquiring the TA of the candidate cell, or stopping sending the uplink signal.

For a detailed description of steps 801a-803a, reference may be made to the description of the above embodiments.

In summary, in an embodiment of the present disclosure, in response to the terminal failing to send the uplink signal in the candidate cell, and/or in response to the TA of the candidate cell acquired by the terminal changing from the available state to the unavailable state, the first processing may be performed. It can be seen that the present disclosure provides a processing method for these situations of "the terminal failing to send the uplink signal in the candidate cell, and/or the TA of the candidate cell acquired by the terminal changing from the available state to the unavailable state", and provides a deterministic reference for further actions, which may avoid a situation of "when the terminal fails to send the uplink signal in the candidate cell, and/or, when the TA of the candidate cell acquired by the terminal changes from the available state to the unavailable state, the terminal does not know what to do, resulting in a signal transmitting interference and a power loss", thus ensuring stability of terminal communication.

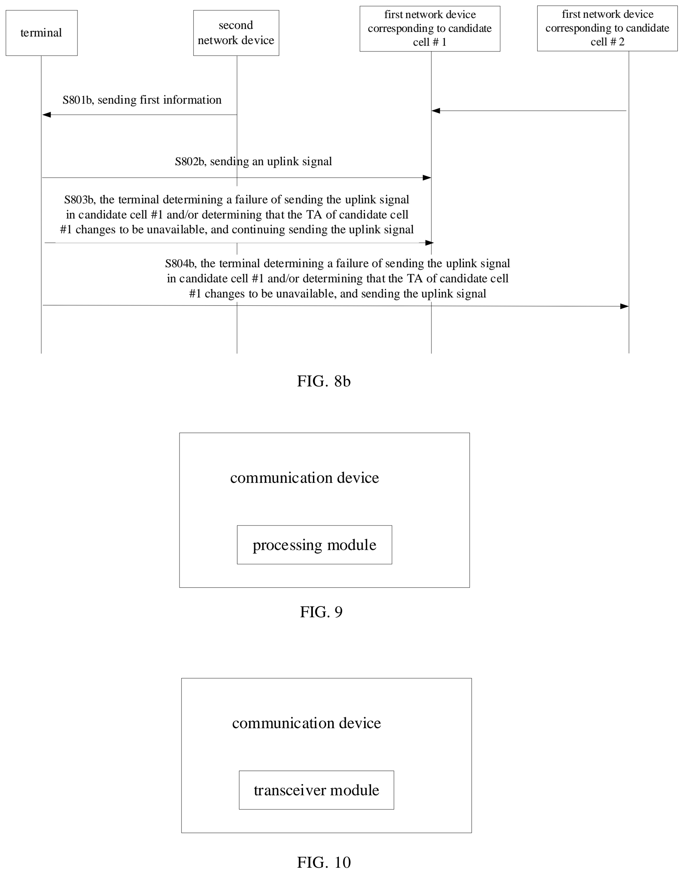

FIG. 8b is a flowchart of a processing method provided by an embodiment of the disclosure. As illustrated in FIG. 8b, the processing method may include the following steps.

At step 801b, a second network device sends first information to a terminal, in which the first information is used to determine uplink signal configuration information associated with a candidate cell of the terminal.

At step 802b, the terminal sends an uplink signal to a first network device corresponding to a candidate cell #1 based on the uplink signal configuration information associated with the candidate cell #1, to acquire a TA of the candidate cell #1.

At step 803b: the terminal determines a failure of sending the uplink signal in the candidate cell #1 and/or determines that the TA of the candidate cell #1 changes to be unavailable, and continues sending the uplink signal to the first network device corresponding to the candidate cell #1, to acquire the TA of the candidate cell #1.

For a detailed description of "continuing sending the uplink signal to the first network device corresponding to the candidate cell #1", reference may be made to the description of the above embodiments.

At step 804b: the terminal determines a failure of sending the uplink signal in the candidate cell #1 and/or determines that the TA of the candidate cell #1 changes to be unavailable, and sends the uplink signal to the first network device corresponding to a candidate cell #2 based on the uplink signal configuration information associated with the candidate cell #2, to acquire the TA of the candidate cell #2.

In an example, in some embodiments, after the step 802b or the step 803b is performed, if the terminal successfully sends the uplink signal of the candidate cell #1 (that is, the terminal acquires the TA of the candidate cell #1), and/or the terminal determines that the TA of the candidate cell #1 does not change to be unavailable, the terminal may also send the uplink signal to the first network device corresponding to the candidate cell #2 based on the uplink signal configuration information associated with the candidate cell #2, to acquire the TA of the candidate cell #2.

FIG. 9 is a schematic structural diagram of a communication device provided by an embodiment of the disclosure. As illustrated in FIG. 9, the device may include:
a processing module, configured to determine that a terminal fails to send an uplink signal in a candidate cell, and/or determine that a TA of a candidate cell changes to be unavailable, and perform a first processing, in which the first processing is used to implement at least one of: acquiring the TA of the candidate cell, or stopping sending the uplink signal.

In summary, in the communication device provided in an embodiment of the present disclosure, in response to the terminal failing to send the uplink signal in the candidate cell, and/or in response to the TA of the candidate cell acquired by the terminal changing from the available state to the unavailable state, the first processing may be performed. It can be seen that the present disclosure provides a processing method for these situations of "the terminal failing to send the uplink signal in the candidate cell, and/or the TA of the candidate cell acquired by the terminal changing from the available state to the unavailable state", and provides a deterministic reference for further actions, which may avoid a situation of "when the terminal fails to send the uplink signal in the candidate cell, and/or, when the TA of the candidate cell acquired by the terminal changes from the available state to the unavailable state, the terminal does not know what to do, resulting in a signal transmitting interference and a power loss", thus ensuring stability of terminal communication.

Optionally, in an embodiment of the present disclosure, the terminal failing to send the uplink signal in the candidate cell includes at least one of:
receiving no acknowledgement information from a first network device after the terminal sends the uplink signal to the first network device corresponding to the candidate cell; or
a number of times that the terminal sends the uplink signal to a first network device corresponding to the candidate cell being greater than or equal to a first threshold.

Optionally, in an embodiment of the present disclosure, the TA of the candidate cell changing to be unavailable includes at least one of:
a change of configuration information of the candidate cell, in which the configuration information of the candidate cell is used to configure the candidate cell;
a change of uplink signal configuration information associated with the candidate cell, in which the uplink signal configuration information is used to configure a transmission resource, and the transmission resource is a transmission resource used when the terminal sends the uplink signal to a first network device corresponding to the candidate cell;
a change of a serving cell of the terminal; or
an expiration of a timer corresponding to the TA of the candidate cell, in which the timer is started when the terminal acquires the TA of the candidate cell.

Optionally, in an embodiment of the present disclosure, the processing module is further configured to perform at least one of:
performing the first processing based on an indication of a second network device, wherein the second network device is a network device corresponding to a current serving cell of the terminal; or
performing the first processing based on a protocol agreement.

Optionally, in an embodiment of the present disclosure, the processing module is further configured to perform at least one of:
sending failure information, wherein the failure information is used to indicate that the terminal fails to send the uplink signal in the candidate cell, and/or to indicate that the TA of the candidate cell changes to be unavailable;
stopping sending the uplink signal to a first network device corresponding to the candidate cell;
continuing sending the uplink signal to a first network device corresponding to the candidate cell;
reserving a transmission resource for the uplink signal;
discarding a transmission resource for the uplink signal;
sending a PRACH signal in the candidate cell to trigger a random access procedure in the candidate cell; or
sending a PRACH signal in a current serving cell of the terminal to trigger a random access procedure in the current serving cell.

Optionally, in an embodiment of the present disclosure, the processing module is further configured to perform at least one of:
sending the failure information to the first network device corresponding to the candidate cell; or
sending the failure information to a second network device corresponding to the current serving cell.

Optionally, in an embodiment of the present disclosure, the processing module is further configured to:
when the terminal performs a handover to the candidate cell, send the failure information to the first network device corresponding to the candidate cell.

Optionally, in an embodiment of the present disclosure, the failure information includes at least one of:
a triggering cause, in which the triggering cause includes the terminal failing to send the uplink signal in the candidate cell, and/or the TA of the candidate cell changing to be unavailable;
a purpose of the candidate cell;
a purpose of the uplink signal;
a first cell indication, in which the first cell indication is used to indicate: a candidate cell for which the TA is not acquired, and/or a candidate cell for which the TA changes to be unavailable; or
a second cell indication, in which the second cell indication is used to indicate: a serving cell of the terminal when the terminal fails to send the uplink signal in the candidate cell, and/or when the TA of the candidate cell changes to be unavailable.

Optionally, in an embodiment of the present disclosure, the first cell indication includes at least one of:
a cell configuration identifier of a cell indicated by the first cell indication;
a cell group configuration identifier of a cell indicated by the first cell indication;
a cell identifier of a cell indicated by the first cell indication; or
a cell group identifier of a cell indicated by the first cell indication;
the second cell indication includes at least one of:
a cell configuration identifier of a cell indicated by the second cell indication;
a cell group configuration identifier of a cell indicated by the second cell indication;
a cell identifier of a cell indicated by the second cell indication; or
a cell group identifier of a cell indicated by the second cell indication.

Optionally, in an embodiment of the present disclosure, the processing module is further configured to:
send the uplink signal to the first network device based on uplink signal configuration information, in which the uplink signal configuration information is associated with a candidate cell corresponding to the first network device.

Optionally, in an embodiment of the present disclosure, the device is further configured to:
determine uplink signal configuration information associated with the candidate cell;
send the uplink signal to a first network device corresponding to the candidate cell based on the uplink signal configuration information.

Optionally, in an embodiment of the present disclosure, the device is further configured to:
receive first information sent by a second network device, in which the first information is used to determine the uplink signal configuration information;
determine the uplink signal configuration information based on the first information.

Optionally, in an embodiment of the present disclosure, the first information includes at least one of:
an RRC message;
physical control information; or
MAC control information.

Optionally, in an embodiment of the present disclosure, the device is further configured to:
receive second information sent by the first network device, in which the second information is used to determine the TA of the candidate cell; and
determining the TA of the candidate cell based on the second information.

Optionally, in an embodiment of the present disclosure, the uplink signal includes at least one of:
a PRACH signal; or
an SRS.

FIG. 10 is a schematic structural diagram of a communication device provided by an embodiment of the disclosure. As illustrated in FIG. 10, the device may include:
a transceiver module, configured to receive failure information sent by a terminal, in which the failure information is sent to a first network device when the terminal performs a handover to a candidate cell, and the failure information is used to indicate that the terminal fails to send an uplink signal in the candidate cell, and/or to indicate that a TA of the candidate cell changes to be unavailable.

In summary, in the communication device provided in an embodiment of the present disclosure, in response to the terminal failing to send the uplink signal in the candidate cell, and/or in response to the TA of the candidate cell acquired by the terminal changing from the available state to the unavailable state, the terminal may send the failure information to the first network device. It can be seen that the present disclosure provides a processing method for these situations of "the terminal failing to send the uplink signal in the candidate cell, and/or the TA of the candidate cell acquired by the terminal changing from the available state to the unavailable state", and provides a deterministic reference for further actions, which may avoid a situation of "when the terminal fails to send the uplink signal in the candidate cell, and/or, when the TA of the candidate cell acquired by the terminal changes from the available state to the unavailable state, the terminal does not know what to do, resulting in a signal transmitting interference and a power loss", thus ensuring stability of terminal communication.

Optionally, in an embodiment of the present disclosure, the failure information includes at least one of:
a triggering cause, in which the triggering cause includes the terminal failing to send the uplink signal in the candidate cell, and/or the TA of the candidate cell changing to be unavailable;
a purpose of the candidate cell;
a purpose of the uplink signal;
a first cell indication, in which the first cell indication is used to indicate: a candidate cell for which the TA is not acquired, and/or a candidate cell for which the TA changes to be unavailable; or
a second cell indication, in which the second cell indication is used to indicate: a serving cell of the terminal when the terminal fails to send the uplink signal in the candidate cell, and/or when the TA of the candidate cell changes to be unavailable.

Optionally, in an embodiment of the present disclosure, the first cell indication includes at least one of:
a cell configuration identifier of a cell indicated by the first cell indication;
a cell group configuration identifier of a cell indicated by the first cell indication;
a cell identifier of a cell indicated by the first cell indication; or
a cell group identifier of a cell indicated by the first cell indication;
the second cell indication includes at least one of:
a cell configuration identifier of a cell indicated by the second cell indication;
a cell group configuration identifier of a cell indicated by the second cell indication;
a cell identifier of a cell indicated by the second cell indication; or
a cell group identifier of a cell indicated by the second cell indication.

Optionally, in an embodiment of the present disclosure, the device is further configured to:
receive the uplink signal sent by the terminal;
calculate the TA of the candidate cell based on the uplink signal; and
send second information to the terminal, wherein the second information is used to determine the TA of the candidate cell.

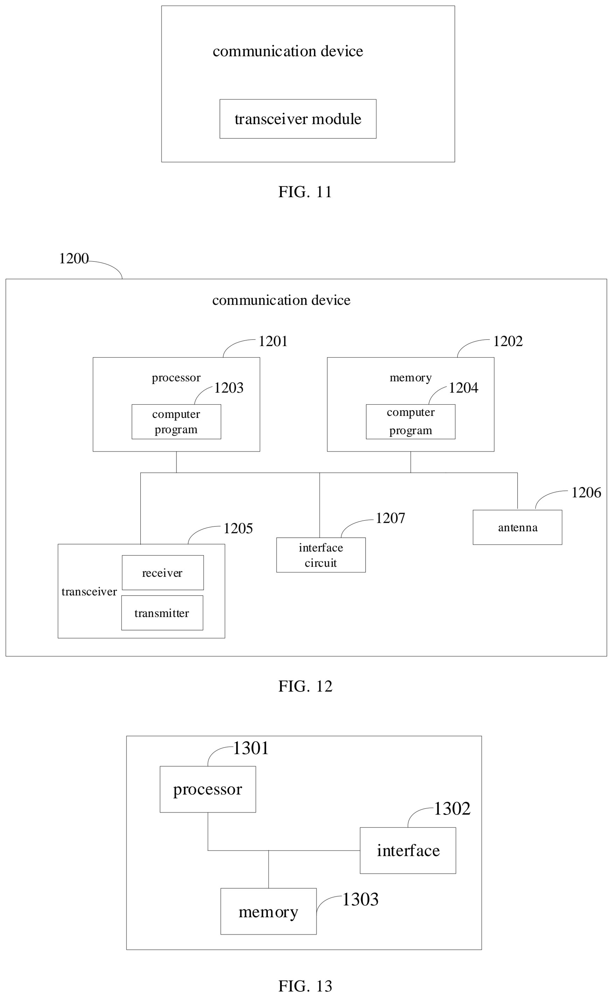

FIG. 11 is a schematic structural diagram of a communication device provided by an embodiment of the disclosure. As illustrated in FIG. 11, the device may include:
a transceiver module, configured to receive failure information sent by a terminal, in which the failure information is used to indicate that the terminal fails to send an uplink signal in a candidate cell, and/or to indicate that a TA of a candidate cell changes to be unavailable.

In summary, in the communication device provided in an embodiment of the present disclosure, in response to the terminal failing to send the uplink signal in the candidate cell, and/or in response to the TA of the candidate cell acquired by the terminal changing from the available state to the unavailable state, the terminal may send the failure information to the second network device. It can be seen that the present disclosure provides a processing method for these situations of "the terminal failing to send the uplink signal in the candidate cell, and/or the TA of the candidate cell acquired by the terminal changing from the available state to the unavailable state", and provides a deterministic reference for further actions, which may avoid a situation of "when the terminal fails to send the uplink signal in the candidate cell, and/or, when the TA of the candidate cell acquired by the terminal changes from the available state to the unavailable state, the terminal does not know what to do, resulting in a signal transmitting interference and a power loss", thus ensuring stability of terminal communication.

Optionally, in an embodiment of the present disclosure, the device is further configured to:
send first information to the terminal, in which the first information is used to determine uplink signal configuration information associated with the candidate cell, and the uplink signal configuration information is used to configure a transmission resource, and the transmission resource is a transmission resource used when the terminal sends the uplink signal to a first network device corresponding to the candidate cell.

Optionally, in an embodiment of the present disclosure, the first information includes at least one of:
an RRC message;
physical control information; or
MAC control information.

FIG. 12 is a schematic structural diagram of a communication device 1200 provided by an embodiment of the disclosure. The communication device 1200 may be a bast station or a terminal, or may be a chip, a chip system or a processor that supports the bast station to implement the above method, or may be a chip, a chip system or a processor that supports the terminal to implement the above method. The device can be used to implement the method described in the above method embodiments with reference to the descriptions of the method embodiments.

The communication device 1200 includes one or more processors 801. The processor 801 may be a general purpose processor or a dedicated processor, such as, a baseband processor and a central processor. The baseband processor is used for processing communication protocols and communication data. The central processor is used for controlling the communication device (e.g., a base station, a baseband chip, a terminal, a terminal chip, a central unit (CU) or a distributed unit (DU)), executing computer programs, and processing data of the computer programs.

In an embodiment of the disclosure, the communication device 1200 includes one or more memories 1202 on which a computer program 1204 is stored. The processor 1201 executes the computer programs 1204 to cause the communication device 1200 to implement the method described in the above method embodiments. In an embodiment of the disclosure, the memory 1202 may also store data. The communication device 1200 and the memory 1202 may be provided separately or may be integrated together.

In an embodiment of the disclosure, the communication device 1200 also includes a transceiver 1205 and an antenna 1206. The transceiver 1205 may be referred to as a transceiver unit, a transceiver machine or a transceiver circuit, for implementing a transceiver function. The transceiver 1205 includes a receiver and a transmitter. The receiver may be referred to as a receiving machine or a receiving circuit, for implementing a receiving function. The transmitter may be referred to as a transmitter machine or a transmitting circuit, for implementing a transmitting function.

In an embodiment of the disclosure, the communication device 1200 may also include one or more interface circuits 1207. The interface circuits 1207 are used to receive code instructions and transmit the code instructions to the processor 1201. The processor 1201 runs the code instructions to cause the communication device 1200 to implement the method described in the method embodiments.

In an implementation, the processor 1201 may include a transceiver for implementing receiving and transmitting functions. The transceiver may be, for example, a transceiver circuit, an interface or an interface circuit. The transceiver circuit, the interface or the interface circuit for implementing the receiving and transmitting functions may be separated or may be integrated together. The transceiver circuit, the interface or the interface circuit described above may be used for reading and writing code/data, or may be used for signal transmission or delivery.

In an implementation, the processor 1201 may store a computer program 1203. When the processor 1201 executes the computer program 1203, the communication device 1200 is caused to implement the method described in the method embodiments above. The computer program 1203 may be solidified in the processor 1201, and in such case the processor 1201 may be implemented by hardware.

In an implementation, the communication device 1200 may include circuits. The circuits may implement the transmitting, receiving or communicating function in the above method embodiments. The processor and the transceiver described in the disclosure may be implemented on integrated circuits (ICs), analog ICs, radio frequency ICs (RFICs), mixed signal ICs, application specific integrated circuits (ASICs), printed circuit boards (PCBs), and electronic devices. The processor and the transceiver may be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the descriptions of the above embodiments may be a base station or a terminal, but the scope of the communication device described in the disclosure is not limited thereto, and the structure of the communication device is not limited by FIG. 12. The communication device may be a stand-alone device or may be part of a larger device. For example, the communication device may be:
(1) a stand-alone IC, a chip, a chip system or a subsystem; (2) a collection of ICs including one or more ICs, in an embodiment of the disclosure, the collection of ICs may also include a storage component for storing data and computer programs;(3) an ASIC, such as a modem; (4) a module that can be embedded within other devices; (5) a receiver, a terminal, a smart terminal, a cellular phone, a wireless device, a handheld machine, a mobile unit, an in-vehicle device, a base station, a cloud device, an artificial intelligence device, and the like; and (6) others.

The case that the communication device may be a chip or a chip system can refer to FIG. 13. FIG. 13 is a schematic structural diagram of a chip. The chip shown in FIG. 13 includes a processor 1301 and an interface 1302. There may be one or more processors 1301 and several interfaces 1302.

In an embodiment of the disclosure, the chip also includes a memory 1303 for storing necessary computer programs and data.

It is understood by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be understood as beyond the scope of protection of the embodiments of the disclosure.

The disclosure provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented, in whole or in part, by software, hardware, firmware, or any combination thereof. When implemented using software, the above embodiments may be implemented, in whole or in part, in the form of a computer program product. The computer program product includes one or more computer programs. When loading and executing the computer program on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs)) or wirelessly (e.g., using infrared wave, wireless wave, or microwave). The computer-readable storage medium may be any usable medium to which the computer can access or a data storage device integrated by one or more usable mediums, such as a server or a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or used to indicate the order of precedence.

The term "at least one" in the disclosure can be described as one or more, and the term "a plurality of" can be two, three, four or more, which is not limited by the disclosure. In the embodiments of the disclosure, for a type of technical features, "first", "second" and "third", and "A", "B", "C" and "D" are used to distinguish different technical features of the type, the technical features described using the "first", "second" and "third", and "A", "B", "C" and "D" do not indicate any order of precedence or magnitude.

The correspondences in the tables of the disclosure may be configured or predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables of the disclosure may not be configured, and the above tables may be adjusted appropriately, such as splitting, combining, and the like. The names of the parameters shown in the titles of the above tables may be configured to other names that can be understood by the communication device, and the values or representations of the parameters may be other values or representations that can be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in the disclosure may be understood as define, predefine, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and the design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, for the specific working processes of the systems, apparatuses, and units described above reference can be made to the corresponding processes in the preceding method embodiments, which will not be repeated herein.

The above are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the attached claims.

## Claims

1. A processing method, performed by a terminal, comprising:
determining that the terminal fails to send an uplink signal in a candidate cell, and/or determining that a timing advance (TA) of a candidate cell changes to be unavailable, and performing a first processing, wherein the first processing is used to implement at least one of: acquiring the TA of the candidate cell, or stopping sending the uplink signal.

2. The method according to claim 1, wherein the terminal failing to send the uplink signal in the candidate cell comprises at least one of:
receiving no acknowledgement information from a first network device after the terminal sends the uplink signal to the first network device corresponding to the candidate cell; or
a number of times that the terminal sends the uplink signal to a first network device corresponding to the candidate cell being greater than or equal to a first threshold.

3. The method according to claim 1, wherein the TA of the candidate cell changing to be unavailable comprises at least one of:
a change of configuration information of the candidate cell, wherein the configuration information of the candidate cell is used to configure the candidate cell;
a change of uplink signal configuration information associated with the candidate cell, wherein the uplink signal configuration information is used to configure a transmission resource, and the transmission resource is a transmission resource used when the terminal sends the uplink signal to a first network device corresponding to the candidate cell;
a change of a serving cell of the terminal; or
an expiration of a timer corresponding to the TA of the candidate cell, wherein the timer is started when the terminal acquires the TA of the candidate cell.

4. The method according to any one of claims 1 to 3, wherein performing the first processing comprises at least one of:
performing the first processing based on an indication of a second network device, wherein the second network device is a network device corresponding to a current serving cell of the terminal; or
performing the first processing based on a protocol agreement.

5. The method according to any one of claims 1 to 4, wherein performing the first processing comprises at least one of:
sending failure information, wherein the failure information is used to indicate that the terminal fails to send the uplink signal in the candidate cell, and/or to indicate that the TA of the candidate cell changes to be unavailable;
stopping sending the uplink signal to a first network device corresponding to the candidate cell;
continuing sending the uplink signal to a first network device corresponding to the candidate cell;
reserving a transmission resource for the uplink signal;
discarding a transmission resource for the uplink signal;
sending a physical random access channel (PRACH) signal in the candidate cell to trigger a random access procedure in the candidate cell; or
sending a PRACH signal in a current serving cell of the terminal to trigger a random access procedure in the current serving cell.

6. The method according to claim 5, wherein sending the failure information comprises at least one of:
sending the failure information to the first network device corresponding to the candidate cell; or
sending the failure information to a second network device corresponding to the current serving cell.

7. The method according to claim 6, wherein sending the failure information to the first network device corresponding to the candidate cell comprises:
when the terminal performs a handover to the candidate cell, sending the failure information to the first network device corresponding to the candidate cell.

8. The method according to any one of claims 5 to 7, wherein the failure information comprises at least one of:
a triggering cause, wherein the triggering cause comprises the terminal failing to send the uplink signal in the candidate cell, and/or the TA of the candidate cell changing to be unavailable;
a purpose of the candidate cell;
a purpose of the uplink signal;
a first cell indication, wherein the first cell indication is used to indicate: a candidate cell for which the TA is not acquired, and/or a candidate cell for which the TA changes to be unavailable; or
a second cell indication, wherein the second cell indication is used to indicate: a serving cell of the terminal when the terminal fails to send the uplink signal in the candidate cell, and/or when the TA of the candidate cell changes to be unavailable.

9. The method according to claim 8, wherein the first cell indication comprises at least one of:
a cell configuration identifier of a cell indicated by the first cell indication;
a cell group configuration identifier of a cell indicated by the first cell indication;
a cell identifier of a cell indicated by the first cell indication; or
a cell group identifier of a cell indicated by the first cell indication;
wherein the second cell indication comprises at least one of:
a cell configuration identifier of a cell indicated by the second cell indication;
a cell group configuration identifier of a cell indicated by the second cell indication;
a cell identifier of a cell indicated by the second cell indication; or
a cell group identifier of a cell indicated by the second cell indication.

10. The method according to claim 5, wherein sending the uplink signal to the first network device corresponding to the candidate cell comprises:
sending the uplink signal to the first network device based on uplink signal configuration information, wherein the uplink signal configuration information is associated with a candidate cell corresponding to the first network device.

11. The method according to any one of claims 1 to 10, wherein, before performing the first processing, the method further comprises:
determining uplink signal configuration information associated with the candidate cell;
sending the uplink signal to a first network device corresponding to the candidate cell based on the uplink signal configuration information.

12. The method according to claim 11, wherein determining the uplink signal configuration information associated with the candidate cell comprises:
receiving first information sent by a second network device, wherein the first information is used to determine the uplink signal configuration information;
determining the uplink signal configuration information based on the first information.

13. The method according to claim 12, wherein the first information comprises at least one of:
a radio resource control (RRC) message;
physical control information; or
media access control (MAC) control information.

14. The method according to claim 12, further comprising:
receiving second information sent by the first network device, wherein the second information is used to determine the TA of the candidate cell; and
determining the TA of the candidate cell based on the second information.

15. The method according to any one of claims 1 to 14, wherein the uplink signal comprises at least one of:
a PRACH signal; or
a sounding reference signal (SRS).

16. A processing method, performed by a first network device which is a network device corresponding to a candidate cell of a terminal, and the method comprising:
receiving failure information sent by the terminal, wherein the failure information is sent to the first network device when the terminal performs a handover to the candidate cell, and the failure information is used to indicate that the terminal fails to send an uplink signal in the candidate cell, and/or to indicate that a timing advance (TA) of the candidate cell changes to be unavailable.

17. The method according to claim 16, wherein the failure information comprises at least one of:
a triggering cause, wherein the triggering cause comprises the terminal failing to send the uplink signal in the candidate cell, and/or the TA of the candidate cell changing to be unavailable;
a purpose of the candidate cell;
a purpose of the uplink signal;
a first cell indication, wherein the first cell indication is used to indicate: a candidate cell for which the TA is not acquired, and/or a candidate cell for which the TA changes to be unavailable; or
a second cell indication, wherein the second cell indication is used to indicate: a serving cell of the terminal when the terminal fails to send the uplink signal in the candidate cell, and/or when the TA of the candidate cell changes to be unavailable.

18. The method according to claim 17, wherein the first cell indication comprises at least one of:
a cell configuration identifier of a cell indicated by the first cell indication;
a cell group configuration identifier of a cell indicated by the first cell indication;
a cell identifier of a cell indicated by the first cell indication; or
a cell group identifier of a cell indicated by the first cell indication;
wherein the second cell indication comprises at least one of:
a cell configuration identifier of a cell indicated by the second cell indication;
a cell group configuration identifier of a cell indicated by the second cell indication;
a cell identifier of a cell indicated by the second cell indication; or
a cell group identifier of a cell indicated by the second cell indication.

19. The method according to any one of claims 16 to 18, further comprising:
receiving the uplink signal sent by the terminal;
calculating the TA of the candidate cell based on the uplink signal; and
sending second information to the terminal, wherein the second information is used to determine the TA of the candidate cell.

20. A processing method, performed by a second network device which is a network device corresponding to a current serving cell of a terminal, and the method comprising:
receiving failure information sent by the terminal, wherein the failure information is used to indicate that the terminal fails to send an uplink signal in a candidate cell, and/or to indicate that a timing advance (TA) of a candidate cell changes to be unavailable.

21. The method according to claim 20, further comprising:
sending first information to the terminal, wherein the first information is used to determine uplink signal configuration information associated with the candidate cell, and the uplink signal configuration information is used to configure a transmission resource, and the transmission resource is a transmission resource used when the terminal sends the uplink signal to a first network device corresponding to the candidate cell.

22. The method according to claim 21, wherein the first information comprises at least one of:
a radio resource control (RRC) message;
physical control information; or
media access control (MAC) control information.

23. A processing method, comprising:
a second network device sending first information to a terminal, wherein the first information is used to determine uplink signal configuration information associated with a candidate cell, the uplink signal configuration information is used to configure a transmission resource, the transmission resource is a transmission resource used when the terminal sends an uplink signal to a first network device corresponding to the candidate cell;
the terminal sending the uplink signal to the first network device corresponding to the candidate cell based on the uplink signal configuration information; and
the terminal determining that the terminal fails to send the uplink signal in the candidate cell and/or determining that a timing advance (TA) of a candidate cell changes to be unavailable, and performing a first processing, wherein the first processing is used to implement at least one of: acquiring the TA of the candidate cell, or stopping sending the uplink signal.

24. A communication device, comprising:
a processing module, configured to determine that a terminal fails to send an uplink signal in a candidate cell, and/or determine that a timing advance (TA) of a candidate cell changes to be unavailable, and perform a first processing, wherein the first processing is used to implement at least one of: acquiring the TA of the candidate cell, or stopping sending the uplink signal.

25. A communication device, comprising:
a transceiver module, configured to receive failure information sent by a terminal, wherein the failure information is sent to a first network device when the terminal performs a handover to a candidate cell, and the failure information is used to indicate that the terminal fails to send an uplink signal in the candidate cell, and/or to indicate that a timing advance (TA) of the candidate cell changes to be unavailable.

26. A communication device, comprising:
a transceiver module, configured to receive failure information sent by a terminal, wherein the failure information is used to indicate that the terminal fails to send an uplink signal in a candidate cell, and/or to indicate that a timing advance (TA) of a candidate cell changes to be unavailable.

27. A communication device, comprising a processor and a memory having a computer program stored thereon, wherein the processor is configured to perform the computer program stored on the memory, causing the device to perform the method according to any one of claims 1 to 15; or the processor is configured to perform the computer program stored on the memory, causing the device to perform the method according to any one of claims 16 to 19; or the processor is configured to perform the computer program stored on the memory, causing the device to perform the method according to any one of claims 20 to 22.

28. A communication device, comprising a processor and an interface circuit; wherein
the interface circuit is configured to receive code instructions and transmit the code instructions to the processor;
the processor is configured to run the code instructions to perform the method according to any one of claims 1 to 15, or the method according to any one of claims 16 to 19, or the method according to any one of claims 20 to 22.

29. A computer-readable storage medium for storing instructions that, when executed, cause the method according to any one of claims 1 to 15, or the method according to any one of claims 16 to 19, or the method according to any one of claims 20 to 22, to be implemented.
